# DEMANDE DE BREVET EUROPEEN

(11) **EP 0 834 427 A1**
(43) Date de publication de la demande: **08.04.1998**
(21) Numéro de dépôt: 97402276.6
(22) Date de dépôt: 30.09.1997
(51) Int. Cl.: B60R 16/02

(54) **Contacteur électrique rotatif comprenant des moyens d'assemblage contrôlés**

(30) Priorité: 01.10.1996 FR 9611935
(71) Demandeur: MAGNETI MARELLI FRANCE, 92002 Nanterre Cédex (FR)
(72) Inventeur: Hallet, Michel, 14320 Clinchamps sur Orne (FR)
(74) Mandataire: Texier, Christian

(57) **Abrégé**

La présente invention concerne un contacteur électrique rotatif du type connu comprenant au moins un élément fixe (10), un élément mobile (20) guidé à rotation par rapport à l'élément fixe (10) et un élément électriquement conducteur souple placé entre l'élément fixe (10) et l'élément mobile (20), caractérisé par le fait que le contacteur comporte en outre : une rainure radiale prévue sur une première pièce (10), une gorge spiralée (22) et une rampe (24) prévues sur une seconde pièce (20) susceptibles de rotation relative par rapport à la première, des moyens (30) de fixation, un index (40) en prise, d'une part avec la gorge spiralée (22) et, d'autre part avec la rainure radiale de sorte que ledit index (40) soit déplacé radialement dans la rainure lors d'un déplacement relatif entre les deux pièces (10, 20), ledit index (40) comportant une gorge (43), et un masque (50) adapté pour être engagé dans la gorge (43) de l'index (40) et reposant sur la rampe (24) de la seconde pièce (20), de sorte que ladite rampe (24) n'autorise l'engagement du masque (50) dans la gorge (43) que dans une position unique prédéterminée relative entre l'élément fixe (10) et l'élément mobile (20), le masque (50) interdisant l'accès aux moyens de fixation (30) lorsqu'il est sollicité vers l'extérieur de la gorge (43) par ladite rampe (24).

## Description

La présente invention concerne le domaine des contacteurs électriques rotatifs.

Plus précisément, la présente invention concerne les contacteurs du type comprenant :
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

On a décrit en particulier dans le document FR-A-2667457 un dispositif de transmission de signaux du type précité comprenant deux cages respectivement externe et interne susceptibles de rotation relative et des moyens souples conducteurs de signal placés entre les deux cages, dans lequel le dispositif comprend un système d'indexage formé, d'une part d'un guide en spirale ménagé sur une première pièce, et d'autre part d'un doigt d'indexage engagé sur le guide en spirale et placé dans une fenêtre ménagée dans une seconde pièce susceptible de rotation par rapport à la première pièce, de sorte que le doigt d'indexage soit déplacé radialement par rapport à l'axe de rotation des pièces lorsque celles-ci sont entraînées à rotation relative.

Les moyens décrits dans ce document permettent de détecter la position relative médiane ou "point milieu" entre les deux éléments de base du contacteur, lorsqu'un index prévu sur le doigt d'indexage coïncide avec un index placé en regard sur ladite seconde pièce.

La présente invention a maintenant pour but de perfectionner les contacteurs électriques rotatifs connus, afin d'imposer une position relative unique entre l'élément fixe et l'élément mobile autorisant le montage et le démontage dudit contacteur.

Ce but est atteint selon la présente invention grâce à un contacteur électrique rotatif du type connu comprenant au moins un élément fixe, un élément mobile guidé à rotation par rapport à l'élément fixe et un élément électriquement conducteur souple placé entre l'élément fixe et l'élément mobile, caractérisé par le fait que le contacteur comporte en outre :
- une rainure radiale prévue sur une première pièce,
- une gorge spiralée et une rampe prévues sur une seconde pièce susceptible de rotation relative par rapport à la première,
- des moyens de fixation sur son site d'utilisation,
- un index en prise, d'une part avec la gorge spiralée et, d'autre part avec la rainure radiale de sorte que ledit index soit déplacé radialement dans la rainure lors d'un déplacement relatif entre les deux pièces, ledit index comportant une gorge, et
- un masque adapté pour être engagé dans la gorge de l'index et reposant sur la rampe de la seconde pièce de sorte que ladite rampe n'autorise l'engagement du masque dans la gorge que dans une position unique prédéterminée relative entre l'élément fixe et l'élément mobile, le masque interdisant l'accès aux moyens de fixation lorsqu'il est sollicité vers l'extérieur de la gorge par ladite rampe.

L'homme de l'art comprendra que l'invention permet ainsi par exemple d'imposer une position relative de montage et de démontage du contacteur correspondant à une position médiane, généralement dite "point milieu", de la course à rotation du contacteur et par conséquent de garantir une position du contacteur compatible avec la position du volant et de l'arbre de direction.

D'autres caractéristiques, buts et avantages de l'invention apparaîtront à la lecture de la description détaillée qui va suivre, et en regard des dessins annexés, donnés à titre d'exemple non limitatif et sur lesquels :

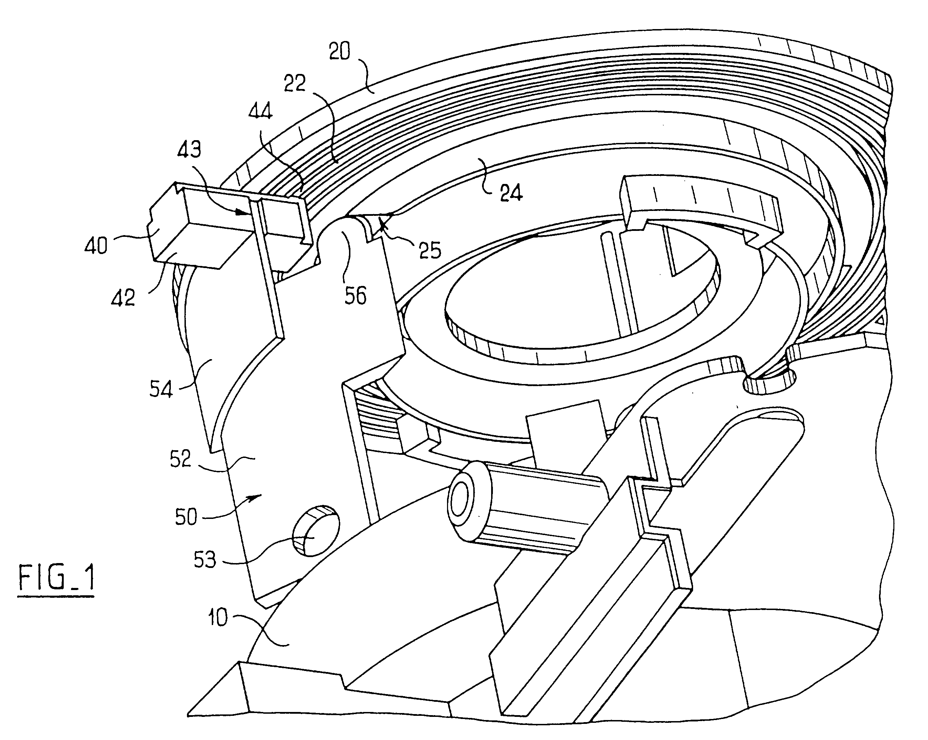

- la figure 1 représente une vue en perspective éclatée d'un contacteur conforme à la présente invention, en point milieu, masque engagé dans la gorge de l'index,
- la figure 2 représente une vue latérale de ce contacteur, assemblé en point milieu,
- la figure 3 représente une autre vue en perspective du contacteur en point milieu,

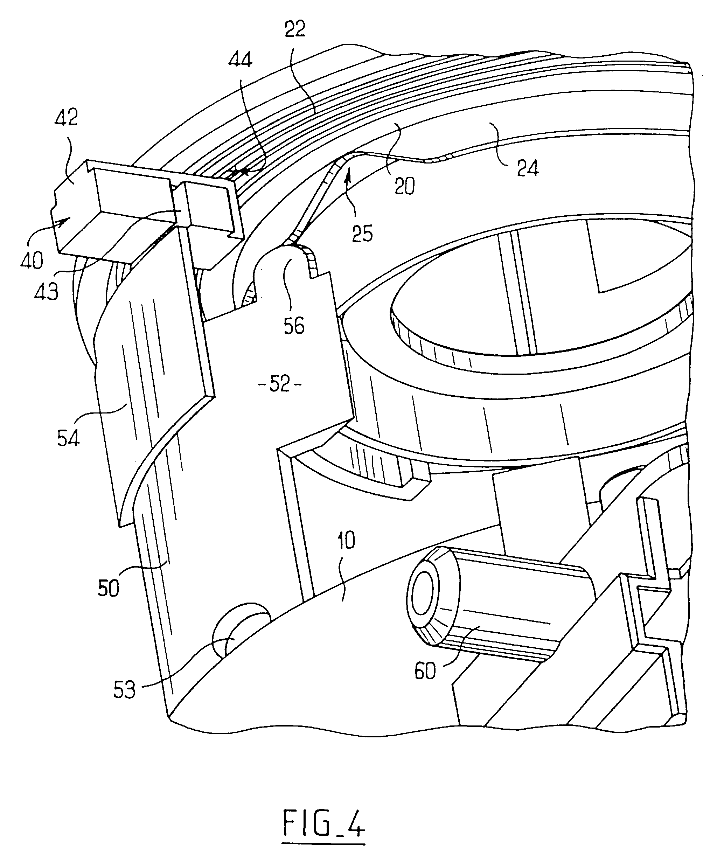

- les figures 4 et 5 représentent deux vues en perspective respectivement comparables aux figures 1 et 3 du même contacteur lorsque celui-ci s'écarte de sa position milieu,

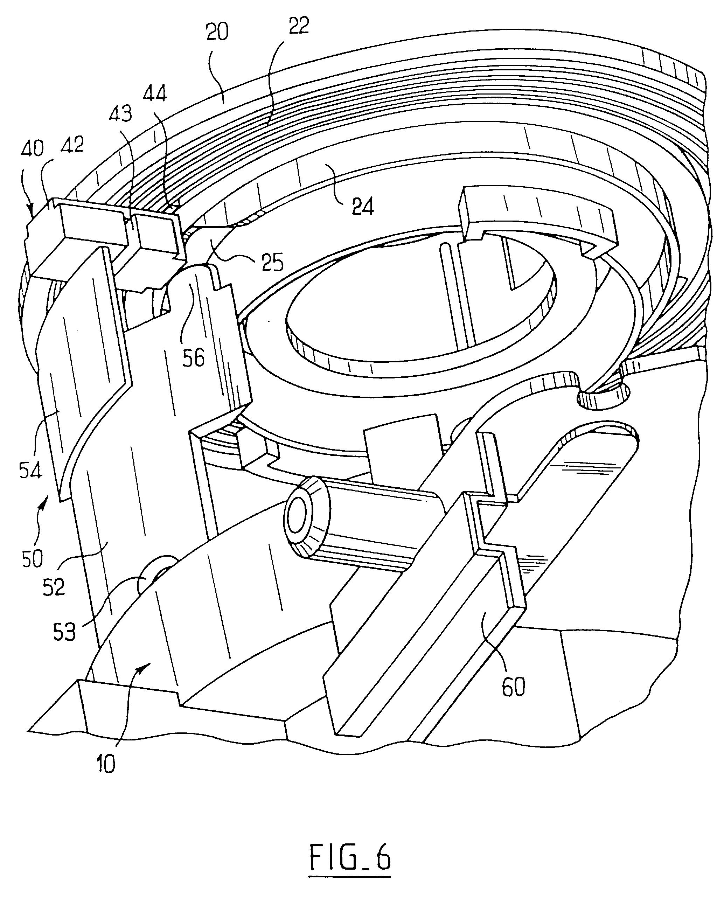

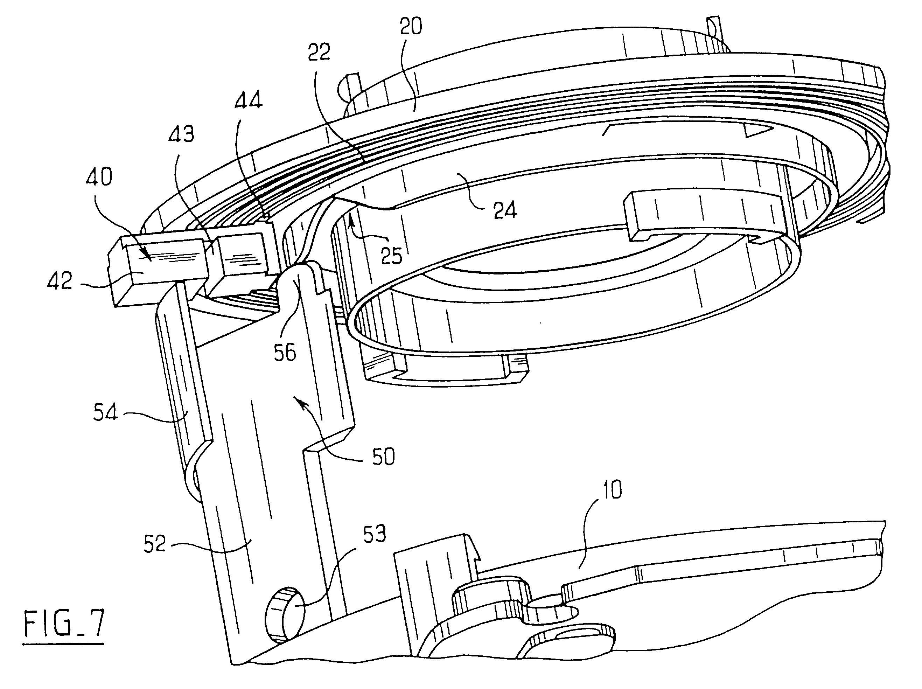

- les figures 6 et 7 représentent deux autres vues en perspective du contacteur après rotation relative du contacteur sur plus d'un tour,
- la figure 8 représente une vue de détail de ce contacteur après une telle rotation, et
- les figures 9 et 10 représentent schématiquement un haut de colonne de direction respectivement en vue latérale et en vue axiale et illustrent l'application d'un ensemble conforme à la présente invention pour imposer une position unique de montage et de démontage de volant.

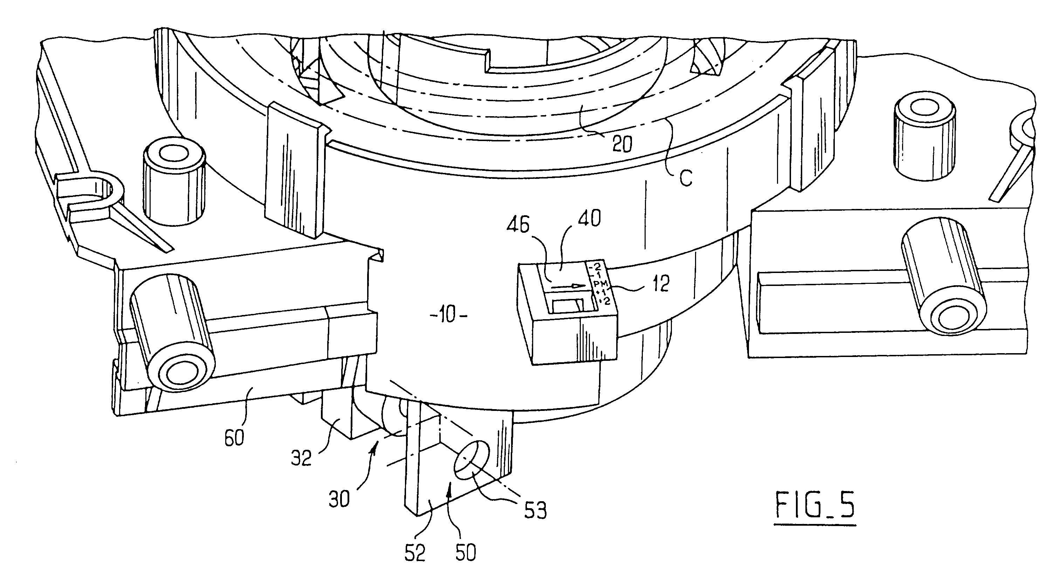

Le contacteur électrique rotatif conforme à la présente invention comprend essentiellement :
- un élément fixe 10,
- un élément rotatif 20,
- un élément électriquement conducteur C (schématiquement illustré en traits interrompus sur la figure 5) dont les extrémités sont fixées respectivement sur l'élément fixe 10 et sur l'élément rotatif 20,
- des moyens de fixation 30,
- un index 40 et
- un masque 50.

La structure de base du contacteur constituée de l'élément fixe 10, de l'élément mobile 20 et de l'élément conducteur C, classique en elle-même et bien connue de l'homme de l'art ne sera pas décrite dans le détail par la suite.

Néanmoins dans le cadre de l'invention, de façon caractéristique, l'élément fixe 10 possède une rainure radiale (non visible sur les figures).

En outre, l'élément mobile 20 comporte une gorge spiralée 22 et une rampe 24.

La gorge 22 est centrée sur l'axe de rotation du contacteur. Elle est de préférence formée sur la face de l'élément mobile 20 dirigée vers l'élément fixe 10.

La rampe 24 formée de préférence sur la même face de l'élément mobile 20, est constituée d'une nervure annulaire comportant un décrochement localisé 25.

Les moyens de fixation 30 peuvent faire l'objet de nombreux modes de réalisation.

Selon le mode de réalisation préférentiel illustré sur les figures annexées, ces moyens de fixation comportent une patte à oeillet 32 solidaire de l'élément fixe 10 et une vis 34 adaptée pour être engagée dans l'oeillet de ladite patte 32 et venir en prise avec un taraudage formé dans un support 60, par exemple la colonne de direction.

La vis 34 est orientée radialement par rapport à l'axe du contacteur (et par rapport à la colonne de direction).

L'index 40 peut également faire l'objet de nombreuses variantes.

Il comprend un corps 42 engagé dans la rainure radiale de l'élément fixe 10 et complémentaire de la largeur de cette rainure de sorte que l'index 40 peut coulisser radialement dans la rainure.

L'index 40 comporte en outre, solidaire du corps 42, un doigt 44 engagé dans la gorge spiralée 22.

L'index 40 étant immobilisé à rotation par rapport à l'élément fixe 10, grâce à son engagement dans la rainure, le déplacement relatif doigt 44/gorge spiralée 22 induit lors d'une rotation relative entre l'élément fixe 10 et l'élément mobile 20, provoque un déplacement radial de l'index dans la rainure.

Le corps 42 possède en outre une gorge 43 d'orientation périphérique. La gorge 43 débouche de préférence en direction de l'élément fixe 10.

Le masque 50 peut également faire l'objet de nombreux modes de réalisation.

Ce masque 50 est adapté pour n'autoriser l'accès aux moyens de fixation 30, plus précisément à la vis 34, que dans une position relative unique prédéterminée entre l'élément fixe 10 et l'élément mobile 20.

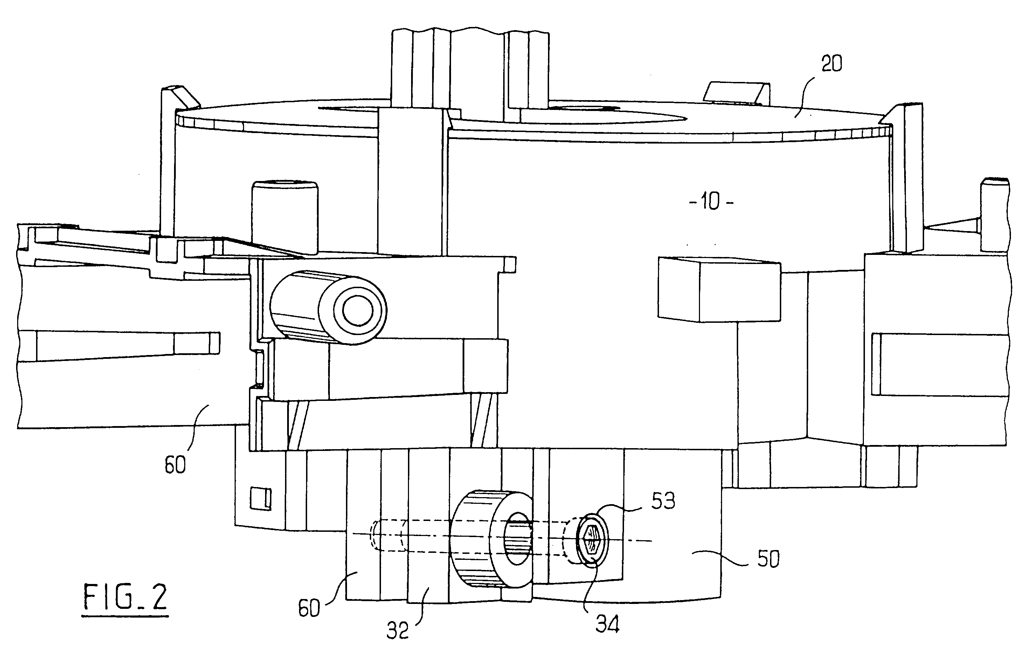

A cette fin le masque 50 comporte par exemple une toile en forme de secteur de cylindre 52 centré sur l'axe du contacteur, comportant un alésage 53. L'alésage 53 n'est coaxial des moyens de fixation 30 que lorsque l'élément fixe 10 et l'élément mobile 20 sont placés dans ladite position relative unique. L'alésage 53 est dimensionné de préférence pour autoriser l'engagement de la tête de la vis 34 lorsqu'il est centré sur celle-ci, comme illustré sur la figure 2.

Ainsi de préférence, comme illustré sur cette figure 2, le contacteur est livré de préférence avec la tête de la vis 34 insérée dans l'alésage 53 pour obtenir une position de livraison verrouillée, tant que la tête de vis 34 est placée dans cet alésage 53.

La toile 52 est solidaire d'une part d'une paroi 54 et d'autre part d'un pion 56.

La paroi 54 est formée également de préférence d'un secteur de cylindre centré sur l'axe du contacteur. L'épaisseur de la paroi 54 est complémentaire de la largeur de la gorge 43 formée dans l'index 40.

Le pion 56 quant à lui coopère avec la rampe 24.

Plus précisément, le pion 56 repose contre le fond du décrochement 25 lorsque le contacteur est placé en position de montage prédéterminée.

De plus, le masque 50 est guidé à translation sur l'élément fixe 10 parallèlement à l'axe du contacteur.

De préférence, le masque 50 est rappelé vers le fond de la gorge 43 par un moyen élastique non illustré sur les figures annexées pour simplifier l'illustration.

Ainsi en position de montage, correspondant de préférence à la position point milieu : le pion 56 repose contre le fond du décrochement 25, la paroi 54 est placée dans la gorge 43, et l'alésage 53 du masque 50 est aligné sur l'oeillet de la patte 32.

L'installateur a alors libre accès à la vis 34 pour assurer le montage ou le démontage du contacteur.

Si cette position correspond au point milieu, le doigt 44 de l'index 40 est placé en zone médiane de la gorge spiralée 22.

A partir de cette position de montage, le fonctionnement du contacteur est le suivant.

Lors d'une faible rotation de l'élément mobile 20, à partir de la position point milieu, la rampe 24 sollicite le pion 56 et par conséquent le masque 50 en éloignement de l'élément rotatif 20, par translation parallèlement à l'axe du contacteur. Suite à ce déplacement du masque 50, la paroi 54 est déplacée à l'extérieur de la gorge 43. Il en résulte que l'alésage 53 du masque n'est plus aligné sur la vis 34. L'accès à la vis 34 n'est alors plus possible et ceci pendant au moins un tour complet de rotation du contacteur, le pion 56 reposant sur le sommet de la rampe 24.

En outre, lorsque la rotation de l'élément mobile 20 est prolongée, la coopération définie entre l'index 40 et la gorge spiralée 22 entraîne un déplacement radial de l'index, de sorte que la gorge 43 de l'index n'est plus alignée sur la paroi 54 du masque. L'amplitude de déplacement de l'index 40 est égale au produit du nombre de tours de rotation du contacteur par le pas de la gorge spiralée 22.

Il en résulte que lorsque le contacteur a effectué un nombre de tours entiers à partir de la position point milieu, le pion 56 est à nouveau placé en regard du décrochement 25. Cependant, le pion 56 ne peut pénétrer dans ce décrochement 25 du fait que la paroi 54 ne peut pénétrer dans la gorge 43 en raison de leurs désalignements. De ce fait, l'alésage 53 reste non centré sur la vis 34 pour interdire l'accès à celle-ci.

En conclusion, l'homme de l'art comprendra aisément que la structure proposée dans le cadre de la présente invention autorise une seule et unique position du contacteur permettant le montage et le démontage à l'aide de la vis 34 et ceci sur la totalité de la rotation possible de l'élément mobile 20.

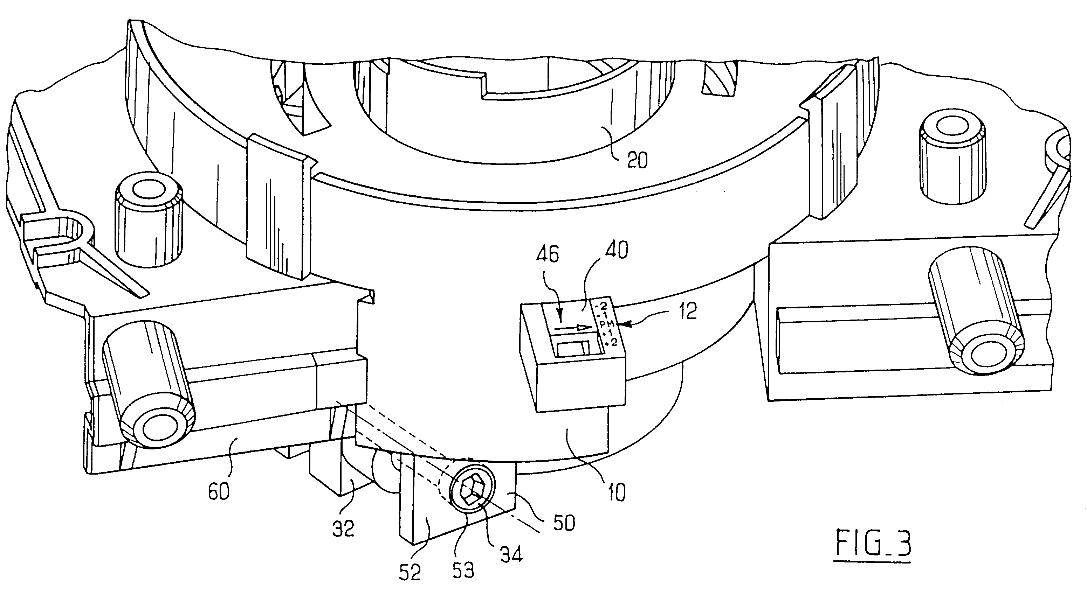

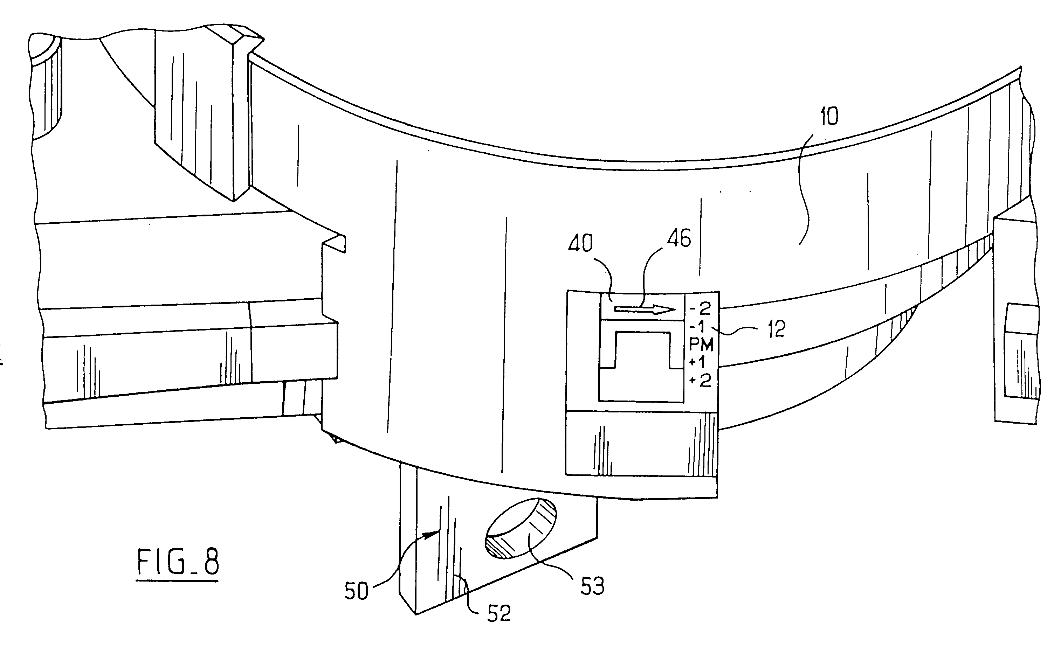

On notera que, comme cela est illustré sur les figures 3, 5 et 8, la structure de contacteur conforme à la présente invention permet en outre de visualiser aisément la position relative des éléments fixe et mobile 10, 20 par observation de la position radiale de l'index 40. Cette observation peut être facilitée en disposant un repère 46 sur l'index 40 en regard d'une échelle de valeurs 12 prévue sur l'élément fixe 10.

Comme illustré sur les figures annexées, l'échelle 12 peut être graduée directement en nombre de tours de rotation du contacteur en prévoyant un pas de graduation égal au déplacement radial de l'index 40 pour un tour de rotation du contacteur.

Bien entendu la présente invention n'est pas limitée au mode de réalisation particulier qui vient d'être décrit, mais s'étend à toute variante conforme à son esprit.

En particulier, l'invention n'est pas limitée au mode de réalisation spécifique précédemment décrit dans lequel la gorge spiralée 22 et la rainure radiale sont formées respectivement sur l'élément rotatif 20 et sur l'élément fixe 10. L'essentiel est simplement de prévoir la gorge spiralée 22 et la rainure radiale assurant le déplacement de l'index 40 sur deux pièces du contacteur susceptibles de rotation relative.

Ainsi, à titre d'exemples non limitatifs, on peut prévoir la rainure radiale sur l'élément fixe 10 et la gorge spiralée 22 sur un élément intercalé entre l'élément fixe 10 et l'élément rotatif 20 et lié à rotation au moins indirectement avec ce dernier, ou encore prévoir la rainure radiale sur un tel élément intermédiaire et la gorge spiralée sur l'élément rotatif 20.

La structure générale d'un tel contacteur électrique rotatif comprenant un élément intermédiaire est bien connue de l'homme de l'art et ne sera donc pas décrite dans le détail par la suite.

Dans la description qui précède les moyens de fixation 30 sont adaptés pour fixer le contacteur sur un support.

Cependant en variante, la vis 30 peut n'être pas utilisée pour fixer le contacteur sur un support, mais être utilisée uniquement pour fixer temporairement la position relative des éléments 10, 20 afin de garantir la position de livraison notamment.

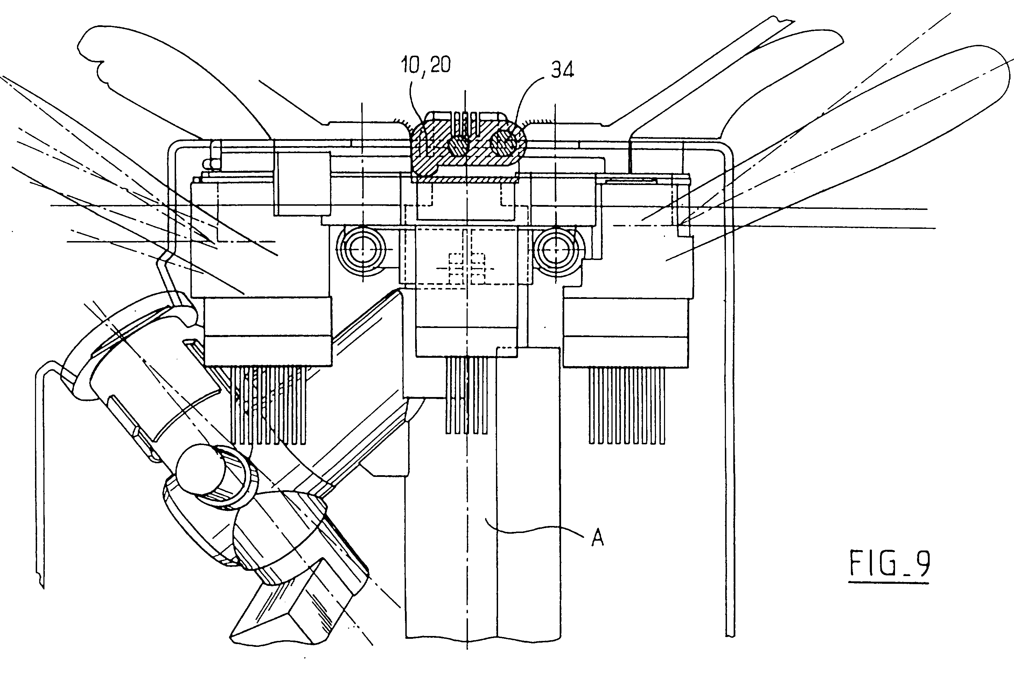

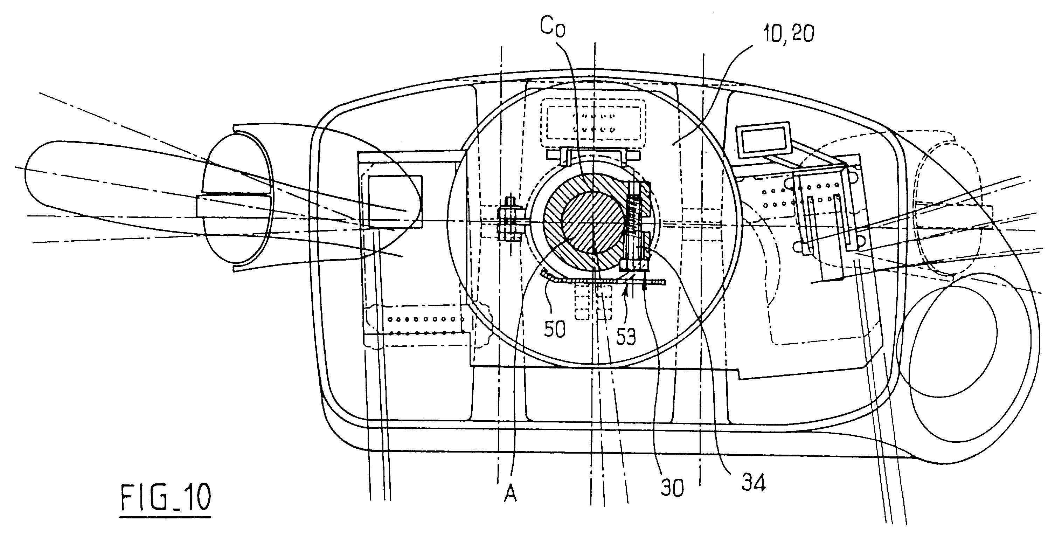

Par ailleurs, comme on l'a schématisé sur les figures 9 et 10, les moyens de fixation 30 dont l'accès est limité par le masque 50 peuvent être adaptés non pas pour la fixation du contacteur 10, 20, mais pour la fixation du volant sur l'arbre de direction A.

On a ainsi schématisé sur les figures 9 et 10 un collier Co lié au volant et comportant deux pattes radiales susceptibles d'être resserrées par la vis 34 pour fixer le volant sur le haut d'un arbre de direction A. La vis 34 est orientée radialement par rapport à l'arbre de direction.

L'homme de l'art comprendra que dans cette configuration le contacteur électrique tournant conforme à la présente invention permet d'imposer une position unique de montage/démontage du volant correspondant à une position point milieu (roues droites) permettant de garantir un bon fonctionnement du contacteur et d'une façon plus générale des opérations de maintenance optimales. En effet en dehors de cette position point milieu la vis 34 de fixation du volant n'est pas accessible.

## Revendications

1. Contacteur électrique rotatif du type connu comprenant au moins un élément fixe (10), un élément mobile (20) guidé à rotation par rapport à l'élément fixe (10) et un élément électriquement conducteur souple placé entre l'élément fixe (10) et l'élément mobile (20),
caractérisé par le fait que le contacteur comporte en outre :
- une rainure radiale prévue sur une première pièce (10),
- une gorge spiralée (22) et une rampe (24) prévues sur une seconde pièce (20) susceptibles de rotation relative par rapport à la première,
- des moyens (30) de fixation,
- un index (40) en prise, d'une part avec la gorge spiralée (22) et, d'autre part avec la rainure radiale de sorte que ledit index (40) soit déplacé radialement dans la rainure lors d'un déplacement relatif entre les deux pièces (10, 20), ledit index (40) comportant une gorge (43), et
- un masque (50) adapté pour être engagé dans la gorge (43) de l'index (40) et reposant sur la rampe (24) de la seconde pièce (20), de sorte que ladite rampe (24) n'autorise l'engagement du masque (50) dans la gorge (43) que dans une position unique prédéterminée relative entre l'élément fixe (10) et l'élément mobile (20), le masque (50) interdisant l'accès aux moyens de fixation (30) lorsqu'il est sollicité vers l'extérieur de la gorge (43) par ladite rampe (24).

2. Contacteur selon la revendication 1, caractérisé par le fait que la première pièce (10) munie de la rainure radiale correspond à l'élément fixe (10).

3. Contacteur selon l'une des revendications 1 ou 2, caractérisé par le fait que la seconde pièce munie de la gorge spiralée (22) et de la rampe (24) correspond à l'élément mobile (20).

4. Contacteur selon l'une des revendications 1 ou 2, caractérisé par le fait que la seconde pièce munie de la gorge spiralée (22) et de la rampe (24) correspond à une pièce intermédiaire située entre l'élément fixe (10) et l'élément mobile (20) et liée à rotation au moins indirectement avec l'élément mobile (20).

5. Contacteur selon l'une des revendications 1 à 4, caractérisé par le fait que la rampe (24) prévue sur la seconde pièce (20) est constituée d'une nervure annulaire comportant un décrochement localisé (25).

6. Contacteur selon l'une des revendications 1 à 5, caractérisé par le fait que les moyens de fixation (30) comprennent au moins une vis (34).

7. Contacteur selon l'une des revendications 1 à 6, caractérisé par le fait que les moyens de fixation (30) comprennent une patte à oeillet (32) solidaire de l'élément fixe (10) et une vis (34) adaptée pour être engagée dans l'oeillet de ladite patte (32) et venir en prise avec un taraudage formé dans un support (60).

8. Contacteur selon l'une des revendications 6 ou 7, caractérisé par le fait que la vis (34) est orientée radialement par rapport à l'axe du contacteur.

9. Contacteur selon l'une des revendications 1 à 8, caractérisé par le fait que l'index (40) comporte un corps (42) engagé dans la rainure radiale de l'élément fixe (10) et complémentaire de la largeur de cette rainure de sorte que l'index (40) peut coulisser radialement dans la rainure.

10. Contacteur selon l'une des revendications 1 à 9, caractérisé par le fait que l'index (40) comporte un doigt (44) engagé dans la gorge spiralée (22).

11. Contacteur selon l'une des revendications 1 à 10, caractérisé par le fait que la gorge (43) formée dans l'index (40) est orientée en direction périphérique par rapport à l'axe de rotation du contacteur.

12. Contacteur selon l'une des revendications 1 à 11, caractérisé par le fait que le masque (50) comporte une toile (52) munie d'un alésage (53) positionné pour n'être centré sur les moyens de fixation (30) que dans une position relative unique de l'élément fixe (10) et de l'élément mobile (20).

13. Contacteur selon la revendication 12, caractérisé par le fait que la toile (52) est formée d'un secteur de cylindre.

14. Contacteur selon l'une des revendications 12 ou 13, caractérisé par le fait que l'alésage (53) est dimensionné pour autoriser l'engagement d'une tête de vis (34) appartenant au moyen de fixation lorsqu'il est centré sur celle-ci.

15. Contacteur selon l'une des revendications 1 à 14, caractérisé par le fait que le masque (50) possède une paroi (54) susceptible d'être introduite dans la gorge (43) de l'index (40).

16. Contacteur selon la revendication 15, caractérisé par le fait que la paroi (54) est formée d'un secteur de cylindre.

17. Contacteur selon l'une des revendications 1 à 16, caractérisé par le fait que le masque (50) possède un pion (56) adapté pour reposer sur la rampe (24) et pénétrer dans un décrochement localisé (25) de celle-ci.

18. Contacteur selon l'une des revendications 1 à 17, caractérisé par le fait que le masque (50) est guidé à translation axiale sur l'élément fixe.

19. Contacteur selon l'une des revendications 1 à 18, caractérisé par le fait qu'il est prévu un moyen élastique qui sollicite le masque (50) vers l'intérieur de la gorge (43) de l'index (40).

20. Contacteur selon l'une des revendications 1 à 19, caractérisé par le fait que des moyens (12) sont associés à l'index (40) pour visualiser le nombre de tours de rotation relative entre l'élément fixe (10) et l'élément mobile (20).

21. Contacteur selon l'une des revendications 1 à 20, caractérisé par le fait que le masque (50) est adapté pour contrôler l'accès à des moyens (34) de fixation du volant.
